# EUROPÄISCHE PATENTANMELDUNG

(11) **EP 2 636 997 A1**
(43) Veröffentlichungstag der Anmeldung: **11.09.2013**
(21) Anmeldenummer: 12001489.9
(22) Anmeldetag: 05.03.2012
(51) Int. Cl.: G01D 5/244, G01P 21/02

(54) **Positionsgeber**

(71) Anmelder: SICK STEGMANN GmbH, 78166 Donaueschingen (DE)
(72) Erfinder: Stein, Simon, Dr., 79102 Freiburg (DE)
(74) Vertreter: Manitz, Gerhart

(57) **Zusammenfassung**

Die vorliegende Erfindung betrifft einen Positionsgeber zur Erzeugung eines Positionssignals, mit einer Sensoreinrichtung und wenigstens einem mit der Sensoreinrichtung verbundenen Positionssignalausgang, wobei die Sensoreinrichtung zum Erfassen einer Relativposition und/oder der Relativpositionsänderung von zwei relativ zueinander beweglichen Teilen und zum Erzeugen des Positionssignals auf der Grundlage der erfassten Relativposition und/oder einer Relativpositionsänderung ausgelegt ist. Der Positionsgeber weist eine Überwachungseinrichtung und einen mit der Überwachungseinrichtung verbundenen Funktionssignalausgang auf, wobei die Überwachungseinrichtung zum Ermitteln wenigstens eines Funktionszustands der Sensoreinrichtung, zum Erzeugen eines Funktionssignals auf der Grundlage des ermittelten Funktionszustands und zum Bereitstellen des Funktionssignals an dem Funktionssignalausgang ausgelegt ist.

## Beschreibung

Die vorliegende Erfindung betrifft einen Positionsgeber, insbesondere Drehgeber, zur Erzeugung eines Positionssignals, mit einer Sensoreinrichtung und wenigstens einen mit der Sensoreinrichtung verbundenen Positionssignalausgang, wobei die Sensoreinrichtung zum Erfassen einer Relativposition und/oder einer Relativpositionsänderung von zwei relativ zueinander beweglichen Teilen und zum Erzeugen des Positionssignals auf der Grundlage der erfassten Relativposition und/oder einer Relativpositionsänderung ausgelegt ist.

Derartige Positionsgeber kommen bei unterschiedlichen Vorrichtungen zum Einsatz, um bezüglich einer Drehwinkel- oder Linearposition einen Positionsabsolutwert, ein Positionsinkrement, die Positionsänderungsrichtung und/oder die Positionsänderungrate (Drehwinkel- bzw. Lineargeschwindigkeit) zu detektieren und ein entsprechendes Positionssignal zu erzeugen. In der Regel werden die Positionssignale von einer nachgeordneten Auswerteeinrichtung verarbeitet und für die Steuerung einer Vorrichtung, beispielsweise einer Maschine oder eines Antriebs, verwendet.

Aufgrund von zunehmenden Anforderungen im Hinblick auf Normen oder gesetzliche Vorschriften ist es erforderlich, die Betriebssicherheit der betreffenden Vorrichtung durch eine Überwachung der von dem Positionsgeber gelieferten Positionssignale zu gewährleisten.

Bei herkömmlichen Positionsgebern erfolgt eine solche Überwachung beispielsweise durch eine sicherheitsgerichtete Auswertung der Positionssignale. Alternativ ist es bekannt, die Positionsgeber redundant auszulegen, beispielsweise durch die Verwendung von zwei Positionsgebern oder einer redundanten Ausführung der Sensoreinrichtung. Eine Fehlerdiagnose erfolgt durch einen Kreuzvergleich der redundanten Sensorkanäle in der nachgeordneten Auswerteeinrichtung.

Bei diesen bekannten Lösungen muss die Auswerteeinrichtung für eine derartige Funktionsüberwachung dezidiert ausgelegt sein, was den Schaltungsaufwand erhöht. Bei redundanter Auslegung besteht neben den erhöhten Kosten für den oder die Positionsgeber auch ein zusätzlicher Aufwand darin, dass bei der nachgeordneten Auswerteeinrichtung eine erhöhte Anzahl von Eingangssignalen empfangen und verarbeitet werden muss.

Es ist die Aufgabe der Erfindung, einen einfach aufgebauten und dennoch sicheren Positionsgeber bereitzustellen.

Die Lösung der Aufgabe erfolgt durch die Merkmale des Anspruchs 1 und insbesondere dadurch, dass der Positionsgeber eine Überwachungseinrichtung und einen mit der Überwachungseinrichtung verbundenen Funktionssignalausgang aufweist, wobei die Überwachungseinrichtung zum Ermitteln wenigstens eines Funktionszustands der Sensoreinrichtung, zum Erzeugen eines Funktionssignals auf der Grundlage des ermittelten Funktionszustands und zum Bereitstellen des Funktionssignals an dem Funktionssignalausgang ausgelegt ist.

Die Erfindung bezieht sich auf alle Arten von Positionsgebern, insbesondere auf Drehgeber, bei denen die relativ zueinander beweglichen Teile rotatorisch zueinander beweglich sind, oder Lineargeber, bei denen die relativ zueinander beweglichen Teile translatorisch zueinander beweglich sind. Das Positionssignal kann Informationen über die Absolutposition (Absolutwertgeber), das Maß und/oder die Richtung einer Relativpositionsänderung (Inkrementalgeber) und/oder eine Relativpositionsänderungsrate (Drehzahl- bzw. Geschwindigkeitsgeber) umfassen.

Die Sensoreinrichtung kann beispielsweise eine bewegliche Maßverkörperung umfassen, die zum Beispiel mit Hilfe von stationären optischen, induktiven, kapazitiven und/oder magnetischen Sensoren abgetastet wird. In der Regel ist die Sensoreinrichtung auch zum Bereitstellen des Positionssignals an dem Positionssignalausgang ausgelegt, wobei diese Funktion jedoch auch entfallen oder deaktiviert werden kann. Der Positionssignalausgang kann insbesondere einen sogenannten A/B-Ausgang umfassen, dessen beide Kanäle oder Anschlüsse zueinander zeitversetzte Positionssignale bereitstellen, wobei das Vorzeichen des Zeitversatzes eine Dreh- bzw. Bewegungsrichtung repräsentiert. Alternativ oder zusätzlich kann ein sogenannter Z-Ausgang vorgesehen sein, welcher bei einer bestimmten Relativposition der beweglichen Teile (Nulldurchgang) ein zusätzliches Signal (Z-Signal) liefert. Die an den Positionssignalausgängen bereitgestellten Positionssignale können alternativ oder zusätzlich, d.h. bei Bereitstellung entsprechender zusätzlicher Positionssignalausgänge bzw. Anschlüsse, in quadrierter und/oder invertierter Form bereitgestellt werden.

Der oder die Positionssignalausgänge können in herkömmlicher Weise mit einer nachgeschalteten Auswerteeinrichtung einer Maschinen- oder Antriebssteuerung oder dergleichen verbunden werden.

Der oder die Funktionssignalausgänge können mit einer nachgeschalteten Sicherheitseinrichtung der Maschinen- oder Antriebssteuerung gekoppelt werden, die mit der vorstehend genannten Auswerteeinrichtung in einer Einheit integriert oder unabhängig von der Auswerteeinrichtung sein kann.

Die Ausgabe des Positionssignals und die Ausgabe des Funktionssignals erfolgen also getrennt voneinander. Durch die von der Auswertung des eigentlichen Positionssignals unabhängige, sicherheitsgerichtete Auswertung oder Überwachung des Funktionssignals kann der Positionsgeber in einer überraschend einfachen Weise auf seine ordnungsgemäße Funktion überwacht werden. Die in der nachgeordneten Maschinensteuerung vorgesehene Auswerteeinrichtung kann relativ einfach konzipiert werden, da diese keine unmittelbar sicherheitsrelevante Funktion übernimmt.

Die eigentliche Funktionsüberwachung und/ oder Diagnose des Positionsgebers wird nämlich von der Überwachungseinrichtung des Positionsgebers übernommen. Falls die Überwachungseinrichtung feststellt, dass eine ordnungsgemäße Funktion des Positionsgebers nicht gegeben ist, wird ein entsprechendes Funktionssignal an dem Funktionssignalausgang ausgegeben. Zum Beispiel mit Hilfe der Sicherheitseinrichtung der Maschinensteuerung, die das Funktionssignal erhält, können dann entsprechende Maßnahmen getroffen werden, beispielsweise eine optische oder akustische Signalisation oder eine Notabschaltung der Maschine. Derartige dezidierte Sicherheitseinrichtungen sind wegen ihrer Sicherheitsrelevanz häufig als separate Baugruppe ausgeführt.

Der erfindungsgemäße Positionsgeber eignet sich insbesondere auch für Nachrüstungen, bei denen bei einer vorhandenen Maschinensteuerung die Funktion einer fehlersicheren Funktionsüberwachung nachträglich implementiert werden soll. Da bei dem erfindungsgemäßen Positionsgeber für das Funktionssignal ein separater Ausgang zur Verfügung steht und sich der Positionssignalausgang in elektrischer Hinsicht von dem Positionssignalausgang eines herkömmlichen Positionsgebers zumindest nicht wesentlich unterscheidet, kann die Auswerteeinrichtung der Maschinensteuerung weiterverwendet werden. Es ist lediglich ein Austausch des Positionsgebers vorzunehmen und ggf. die Sicherheitseinrichtung der Maschine nachzurüsten, sofern diese nicht ohnehin schon vorhanden ist.

Grundsätzlich können mit Hilfe der Überwachungseinrichtung alternativ oder zusätzlich die Positionssignale dahingehend ausgewertet werden, ob sich diese innerhalb vorgegebener Grenzen befinden. Falls hier Abweichungen festgestellt werden, kann ein entsprechendes Funktionssignal am Funktionssignalausgang ausgegeben werden. Dies wird nachfolgend noch näher erläutert.

Gemäß einer bevorzugten Ausführungsform ist der Funktionssignalausgang durch einen Schaltausgang einer mit der Überwachungseinrichtung verbundenen Schalteinrichtung gebildet, wobei ein Schaltzustand der Schalteinrichtung das Funktionssignal repräsentiert. Die Schalteinrichtung kann beispielsweise ein Relais umfassen, dessen Schaltkontakt zum Beispiel nur dann geschlossen ist, wenn keine Funktionsstörung des Positionsgebers vorliegt. Der Funktionssignalausgang ist also als passiver Ausgang ausgebildet.

Gemäß einer weiteren bevorzugten Ausführungsform ist der Funktionssignalausgang durch einen Signalpegelausgang einer mit der Überwachungseinrichtung verbundenen Ausgabeeinrichtung gebildet, wobei ein am Signalpegelausgang bereitgestellter Signalpegel das Funktionssignal repräsentiert. Der Funktionssignalausgang ist also als aktiver Ausgang ausgebildet, beispielsweise als sogenannter OSSD-Ausgang (von englisch: output signal switching device).

Vorzugsweise ist das Funktionssignal ein binäres Signal, wobei bevorzugt der eine Signalzustand einen EIN-Zustand und der andere Signalzustand einen AUS-Zustand repräsentiert. Ein derartiges binäres Signal liegt beispielsweise bei dem vorstehend genannten OSSD-Ausgang vor. Die Signalzustände des binären Signals können beispielsweise von einer nachgeordneten Sicherheitseinrichtung so interpretiert werden, dass bei einem signalisierten EIN-Zustand ein sicherer Betrieb der Maschine möglich ist, während bei einem signalisierten AUS-Zustand ein sicherer Betrieb der Maschine nicht gegeben ist. In dem Zusammenhang ist es bevorzugt, wenn das Funktionssignal den AUS-Zustand repräsentiert, wenn die Überwachungseinrichtung eine Fehlfunktion der Sensoreinrichtung ermittelt hat. Somit kann die Sicherheitseinrichtung die Maschine deaktivieren, wenn die Gefahr besteht, dass die Sensoreinrichtung fehlerhafte Positionssignale am Positionssignalausgang bereitstellt. Grundsätzlich können am Funktionssignalausgang jedoch auch mehr als zwei verschiedene Funktionssignale bzw. Funktionszustände ausgegeben werden.

Gemäß einer vorteilhaften Ausführungsform weist der Positionsgeber einen mit der Überwachungseinrichtung verbundenen Steuereingang auf, wobei die Überwachungseinrichtung dazu ausgelegt ist, das Ermitteln des Funktionszustands der Sensoreinrichtung zusätzlich auf der Grundlage eines am Steuereingang empfangenen Steuersignals durchzuführen. Durch ein solches Steuersignal kann beispielsweise ein zusätzlicher Funktionstest der Sensoreinrichtung ausgelöst werden, der im regulären Betrieb, d.h. bei nicht vorhandenem Steuersignal, nicht durchgeführt werden soll oder kann.

Gemäß einer weiteren bevorzugten Ausführungsform weist die Überwachungseinrichtung eine Speichereinrichtung zur Speicherung wenigstens eines Betriebsparameters auf, wobei das Erzeugen des Funktionssignals einen Vergleich des von der Sensoreinrichtung erzeugten Positionssignals mit dem aus der Speichereinrichtung ausgelesenen Betriebsparameter umfasst. Somit umfassen die durch die Überwachungseinrichtung zu ermittelnden Funktionszustände nicht nur die ordnungsgemäße Funktion der Sensoreinrichtung, sondern zusätzlich auch eine Überwachung der Positionssignale selbst. So kann beispielsweise bei einem Winkelpositionsgeber ein entsprechendes Funktionssignal ausgegeben werden, wenn die erfasste Winkelposition einen durch den oder die Betriebsparameter vorgegebenen Grenzwert über- oder unterschreitet. Weiterhin kann mit Hilfe eines Drehzahlgebers eine Drehzahlüberwachung einer Welle erfolgen, wobei bei einer Überschreitung eines vorgegebenen Drehzahlgrenzwerts ein Funktionssignals ausgegeben wird, das zu einer automatischen Abschaltung des Antriebs der Welle führt.

In dem Zusammenhang ist es bevorzugt, wenn die Speichereinrichtung dazu ausgelegt ist, den zu speichernden Betriebsparameter von einem Parametriereingang zu empfangen. Dadurch ist es möglich, einen anwendungsspezifisch erforderlichen Betriebsparameter in der Speichereinrichtung zu hinterlegen. Bei dem Parametriereingang kann es sich um einen separaten Eingang handeln. Alternativ ist es auch möglich, ohnehin vorhandene Ein- oder Ausgänge des Positionsgebers, beispielsweise den Positionssignalausgang, durch eine entsprechende Beschaltung zugleich als Parametriereingang zu nutzen.

Bevorzugt repräsentiert das Funktionssignal einen AUS-Zustand, wenn sich das Positionssignal außerhalb eines durch den Betriebsparameter vorgegebenen Wertebereichs befindet.

Weitere vorteilhafte Ausführungsformen sind in den Unteransprüchen, der Beschreibung und den Zeichnungen angegeben.

Die Erfindung wird nachfolgend anhand eines Ausführungsbeispiels mit Bezug auf die Zeichnungen beschrieben. Es zeigen:
- Fig. 1: eine schematische Darstellung eines erfindungsgemäßen Positionsgebers; und
- Fig. 2 bis 4: schematische Darstellungen verschiedener Beschaltungsvarianten des Positionsgebers von Fig. 1.

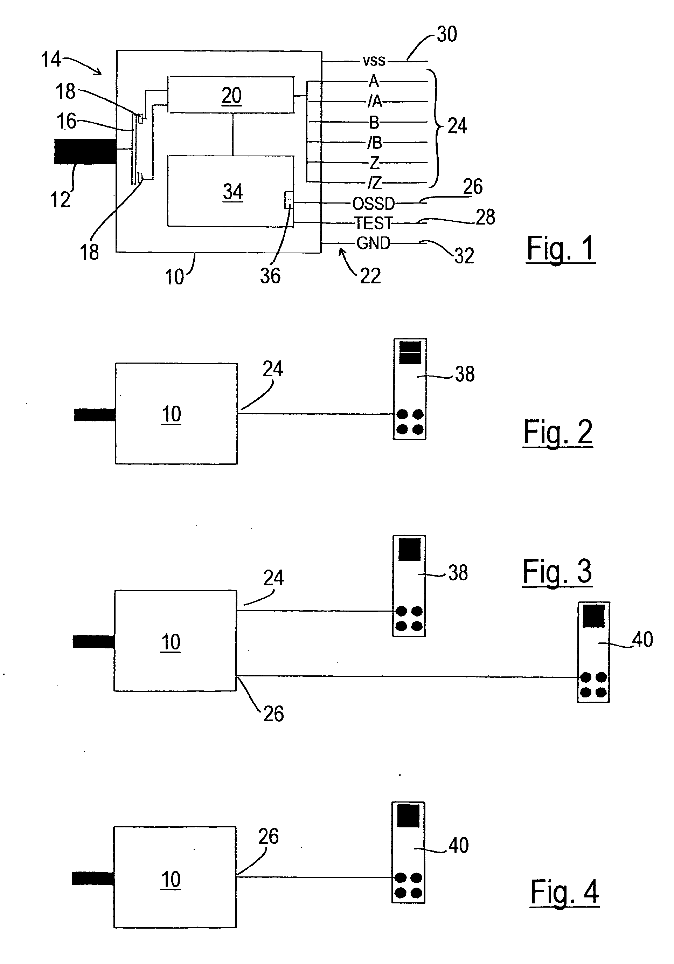

Ein erfindungsgemäßer Positionsgeber 10, der im vorliegenden Ausführungsbeispiel als Drehgeber ausgebildet ist, ist gemäß Fig. 1 mit einer rotierbaren Welle 12 gekoppelt. Der Positionsgeber 10 weist eine Schnittstelle 22 mit einer Mehrzahl von einzelnen Anschlüssen auf. Über die Versorgungsanschlüsse 30 (VSS) und 32 (GND) kann der Positionsgeber 10 mit einer externen Stromquelle (nicht dargestellt) zur Versorgung mit einem Betriebsstrom verbunden werden.

Der Positionsgeber 10 umfasst eine an sich bekannte Sensoreinrichtung 14, welche eine drehfest mit der Welle 12 verbundene Maßverkörperung 16, zwei Sensoren 18 und einen Sensorschaltkreis 20 umfasst. Die Maßverkörperung 16, beispielsweise eine mit Schlitzen oder sonstigen Markierungen versehene Kreisscheibe, wird mittels der Sensoren 18 abgetastet, welche beispielsweise als optische, magnetische, kapazitive oder induktive Sensoren ausgestaltet sein können. Die von den Sensoren 18 erzeugten Signale werden zur Weiterverarbeitung an den Sensorschaltkreis 20 übermittelt.

Auf der Grundlage der von den Sensoren 18 erzeugten Signale erzeugt der Sensorschaltkreis 20 Positionsausgangssignale und stellt diese an Positionssignalausgängen 24 der Schnittstelle 22 bereit, wobei die Positionssignalausgänge 24 mehrere Anschlüsse umfassen. Durch die Rotation der Maßverkörperung 16 wird das an den Anschlüssen A und B der Positionssignalausgänge 24 bereitgestellte Signal periodisch moduliert, wobei sich das am Anschluss A bereitgestellte Signal von dem am Anschluss B bereitgestellten Signal lediglich durch eine Phasenverschiebung unterscheidet, deren Vorzeichen die Drehrichtung der Welle 12 repräsentiert. Am Anschluss Z wird ein Referenzsignal ausgegeben, das einer vorbestimmten Winkelposition oder einer Nullposition der Maßverkörperung 16 entspricht. Die Anschlüsse /A, /B und /Z stellen invertierte Signale der Anschlüsse A, B bzw. Z bereit.

Die Positionssignalausgänge 24 können beispielsweise mit einer Auswerteeinrichtung 38 (Fig. 2 und 3) einer Maschinensteuerung verbunden werden. Die Positionssignale können in der Auswerteeinrichtung 38 weiterverarbeitet werden, beispielsweise für eine Drehzahlregelung eines mit der Welle 12 gekoppelten Antriebs (nicht dargestellt).

Der Positionsgeber 10 weist ferner eine Überwachungseinrichtung 34 auf, die mit dem Sensorschaltkreis 20 der Sensoreinrichtung 14 verbunden ist. Die Überwachungseinrichtung 34 ist zum Ermitteln wenigstens eines Funktionszustands der Sensoreinrichtung 14 und zum Erzeugen eines Funktionssignals auf der Grundlage des ermittelten Funktionszustands ausgelegt. Die Funktionsüberwachung der Sensoreinrichtung 14 kann eine Überwachung der Sensoreinrichtung 14 auf Fehlfunktion einschließen. Die Fehlfunktionsüberwachung kann zum Beispiel auf der Grundlage eines Vergleichs der an den Anschlüssen A und B ausgegebenen Positionssignale erfolgen.

Die Überwachungseinrichtung 34 umfasst eine Ausgabeeinrichtung 36, welche zum Ausgeben oder Bereitstellen des oder der erzeugten Funktionssignale an einem Funktionssignalausgang 26 der Schnittstelle 22 vorgesehen ist. Die Ausgabeeinrichtung 36 kann beispielsweise so ausgebildet sein, dass der Funktionssignalausgang einen sogenannten OSSD-Ausgang bildet. Bei einem solchen OSSD-Ausgang entspricht beispielsweise ein Signalpegel von +24 V einem EIN-Zustand und ein Signal von 0 V einem AUS-Zustand, jeweils bezogen auf das Massepotential am Versorgungsanschluss 32.

Der Funktionssignalausgang 26 kann mit einer Sicherheitseinrichtung 40 (Fig. 3 und 4) einer Maschinensteuerung verbunden werden.

Weiterhin kann die Überwachungseinrichtung 34 eine integrierte Speichereinrichtung (nicht dargestellt) aufweisen, in welcher ein oder mehrere Betriebsparameter abgespeichert werden können. Ein solcher Betriebsparameter kann beispielsweise eine zulässige Höchstdrehzahl der Welle 12 repräsentieren. Stellt die Überwachungseinrichtung 34 durch Auswerten der Positionssignale fest, dass die mit Hilfe der Sensoreinrichtung 14 ermittelte Drehzahl der Welle 12 diese Höchstdrehzahl überschreitet, erzeugt die Überwachungseinrichtung 34 ein entsprechendes Funktionssignal.

Der oder die Betriebsparameter können in der Speichereinrichtung fest vorgegebenen sein oder benutzerspezifisch über einen separaten Parametriereingang (nicht dargestellt) oder bei entsprechender Beschaltung über einen oder mehrere Anschlüsse der Positionssignalausgänge 24 an die Speichereinrichtung übertragen werden.

Wenn die Überwachungseinrichtung 34 weder eine Fehlfunktion der Sensoreinrichtung 14 noch ein Überschreiten der Höchstdrehzahl feststellt, wird am Funktionssignalausgang 26 der EIN-Zustand signalisiert. Solange die Sicherheitseinrichtung 40 diesen EIN-Zustand detektiert, stellt diese einen sicheren Betriebszustand des Positionsgebers 10 fest und gibt die Maschine für den Betrieb frei.

Stellt die Überwachungseinrichtung 34 hingegen eine Fehlfunktion der Sensoreinrichtung 14 und/oder ein Überschreiten der als Betriebsparameter vorgegebenen Höchstdrehzahl vor, wird am Funktionssignalausgang der AUS-Zustand signalisiert. Sobald die Sicherheitseinrichtung 40 den AUS-Zustand detektiert, erfolgt eine Sicherheitsabschaltung der zugeordneten Maschine.

Schließlich kann die Schnittstelle 22 einen mit der Überwachungseinrichtung 34 verbundenen Steuereingang 28 (TEST) aufweisen. Durch Anlegen eines entsprechenden Steuersignals an den Steuereingang 28 kann in der Überwachungseinrichtung 34 ein zusätzlicher Testvorgang ausgelöst werden. Bei diesem Testvorgang kann es sich beispielsweise um eine zusätzliche Funktionsprüfung der Sensoreinrichtung 14 handeln, welche im Regelbetrieb nicht möglich oder nicht erwünscht ist. Ferner kann darüber auch ein Test der Ausgabeeinrichtung 36 erfolgen. Am Funktionssignalausgang 26 wird ein dem Resultat des Testvorgangs entsprechendes Funktionssignal ausgegeben.

Der erfindungsgemäße Positionsgeber 10 lässt sich auf vielfältige Weise einsetzen, was anhand der Fig. 2 bis 4 näher erläutert wird.

Grundsätzlich wird der Positionsgeber 10 gemäß Fig. 3 in einer Konfiguration eingesetzt, bei der sowohl die Positionssignalausgänge 24 mit einer Auswerteeinrichtung 38 als auch der Funktionssignalausgang 26 mit einer Sicherheitseinrichtung 40 verbunden sind. In dieser Konfiguration werden sowohl die Positionssignale als auch die Funktionssignale durch die entsprechenden Einrichtungen ausgewertet.

Darüber hinaus ist es auch möglich, den Positionsgeber 10 wie einen herkömmlichen Positionsgeber einzusetzen, wie dies in Fig. 2 dargestellt ist. Demnach sind lediglich die Positionssignalausgänge 24 mit einer Auswerteeinrichtung 38 verbunden, sodass nur die Positionssignale ausgewertet werden. Eine Auswertung der Funktionssignale erfolgt nicht.

Schließlich kann gemäß Fig. 4 lediglich der Funktionssignalausgang 26 mit einer Sicherheitseinrichtung 40 verbunden sein, sodass nur die Funktionssignale ausgewertet werden. Die Positionssignale werden nicht ausgewertet. In dieser Konfiguration dient der erfindungsgemäße Positionsgeber 10 ausschließlich als Sicherheitselement, beispielsweise als Drehzahlwächter. Bei einem solchen Drehzahlwächter ist eine konkrete Ermittlung der Drehzahl nicht vorgesehen, es erfolgt lediglich eine Überwachung dahingehend, ob zum Beispiel die in der Speichereinrichtung hinterlegte Höchstdrehzahl überschritten wird oder nicht.

Somit vereinigt der erfindungsgemäße Positionsgeber letztlich mehrere Funktionen in einer Einheit und deshalb sehr vielseitig für unterschiedliche Einsatzzwecke verwendbar.

### Bezugszeichenliste

- 10: Positionsgeber
- 12: Welle
- 14: Sensoreinrichtung
- 16: Maßverkörperung
- 18: Sensor
- 20: Sensorschaltkreis
- 22: Schnittstelle
- 24: Positionssignalausgang
- 26: Funktionssignalausgang
- 28: Steuereingang
- 30, 32: Versorgungsanschluss
- 34: Überwachungseinrichtung
- 36: Ausgabeeinrichtung
- 38: Auswerteeinrichtung
- 40: Sicherheitseinrichtung

## Patentansprüche

1. Positionsgeber zur Erzeugung eines Positionssignals, mit einer Sensoreinrichtung (14) und
wenigstens einem mit der Sensoreinrichtung (14) verbundenen Positionssignalausgang (24),
wobei die Sensoreinrichtung (14) zum Erfassen einer Relativposition und/oder einer Relativpositionsänderung von zwei relativ zueinander beweglichen Teilen (16, 18) und zum Erzeugen des Positionssignals auf der Grundlage der erfassten Relativposition und/oder der Relativpositionsänderung ausgelegt ist,
**dadurch gekennzeichnet,**
**dass** der Positionsgeber (10) eine Überwachungseinrichtung (34) und einen mit der Überwachungseinrichtung (34) verbundenen Funktionssignalausgang (26) aufweist,
wobei die Überwachungseinrichtung (34) zum Ermitteln wenigstens eines Funktionszustands der Sensoreinrichtung (14), zum Erzeugen eines Funktionssignals auf der Grundlage des ermittelten Funktionszustands und zum Bereitstellen des Funktionssignals an dem Funktionssignalausgang (26) ausgelegt ist.

2. Positionsgeber nach Anspruch 1,
**dadurch gekennzeichnet,**
**dass** der Funktionssignalausgang (26) durch einen Schaltausgang einer mit der Überwachungseinrichtung verbundenen Schalteinrichtung gebildet ist, wobei ein Schaltzustand der Schalteinrichtung das Funktionssignal repräsentiert.

3. Positionsgeber nach Anspruch 1,
**dadurch gekennzeichnet,**
**dass** der Funktionssignalausgang (26) durch einen Signalpegelausgang einer mit der Überwachungseinrichtung verbundenen Ausgabeeinrichtung (36) gebildet ist, wobei ein am Signalpegelausgang bereitgestellter Signalpegel das Funktionssignal repräsentiert.

4. Positionsgeber nach einem der vorhergehenden Ansprüche,
**dadurch gekennzeichnet,**
**dass** das Funktionssignal ein binäres Signal ist, wobei bevorzugt der eine Signalzustand einen EIN-Zustand und der andere Signalzustand einen AUS-Zustand repräsentiert.

5. Positionsgeber nach Anspruch 4,
**dadurch gekennzeichnet,**
**dass** das Funktionssignal den AUS-Zustand repräsentiert, wenn die Überwachungseinrichtung eine Fehlfunktion der Sensoreinrichtung (14) ermittelt hat.

6. Positionsgeber nach einem der vorhergehenden Ansprüche,
**dadurch gekennzeichnet,**
**dass** der Positionsgeber (10) ferner einen mit der Überwachungseinrichtung (34) verbundenen Steuereingang (28) aufweist, und dass die Überwachungseinrichtung (34) dazu ausgelegt ist, das Ermitteln des Funktionszustands der Sensoreinrichtung (14) zusätzlich auf der Grundlage eines am Steuereingang (28) empfangenen Steuersignals durchzuführen.

7. Positionsgeber nach einem der vorhergehenden Ansprüche,
**dadurch gekennzeichnet ,**
**dass** die Überwachungseinrichtung (34) eine Speichereinrichtung zur Speicherung wenigstens eines Betriebsparameters aufweist, wobei das Erzeugen des Funktionssignals einen Vergleich des von der Sensoreinrichtung (14) erzeugten Positionssignals mit dem aus der Speichereinrichtung ausgelesenen Betriebsparameter umfasst.

8. Positionsgeber nach Anspruch 7,
**dadurch gekennzeichnet ,**
**dass** die Speichereinrichtung dazu ausgelegt ist, den zu speichernden Betriebsparameter von einem Parametriereingang (24) zu empfangen.

9. Positionsgeber nach Anspruch 7 oder 8,
**dadurch gekennzeichnet ,**
**dass** das Funktionssignal einen AUS-Zustand repräsentiert, wenn sich das Positionssignal außerhalb eines durch den Betriebsparameter vorgegebenen Wertebereichs befindet.
